# EUROPEAN PATENT SPECIFICATION

(11) **EP 0 480 556 B1**
(45) Date of publication and mention of the grant of the patent: **26.07.1995**
(21) Application number: 91301693.7
(22) Date of filing: 01.03.1991
(51) Int. Cl.: B01D 61/08, C02F 1/44

(54) **High efficiency water treatment system**
Hochwirksames Wasserbehandlungssystem
Système de traitement d'eau de haute efficacité

(30) Priority: 11.10.1990 US 597207
(43) Date of publication of application: 15.04.1992
(73) Proprietor: CULLIGAN INTERNATIONAL COMPANY, Northbrook, IL 60062 (US)
(72) Inventor: Norton, William N., Buffalo Grove, Illinois 60089 (US)
(74) Representative: MacGregor, Gordon

(56) References cited:
- DE-A- 3 719 675
- DE-U- 9 003 553
- FR-A- 2 087 928
- FR-A- 2 237 094
- US-A- 1 825 631
- US-A- 3 746 640
- US-A- 4 193 872
- US-A- 5 006 234

## Description

### BACKGROUND OF THE INVENTION

There is a need to conserve water, which is in short supply in many areas of the world. Most water treatment processes remove undesired impurities. For example, anions and cations may be removed from water by chemical exchange in water softening, and by what is effectively a filtration technique in reverse osmosis.

In reverse osmosis processes, the waste stream of water often represents a large percentage of the raw feed water stream. Most small, residential reverse osmosis units produce about 5 liters of purified water for every 25 liters of feed water. The remaining 20 liters of water contain concentrated impurities which have been left behind in the main stream, as the purified 5 liters of water have been drawn off.

In the prior art, attempts have been made to avoid the waste of this byproduct water from reverse osmosis. For example, the WaterPure^{sm} system marketed by BioLab Inc. of Decatur, Georgia is a system which recycles the waste water from a reverse osmosis apparatus for household use in secondary faucets, toilets, and appliances, from which drinking of the water is not expected. Thus, all of the water can be used, without waste.

In the Waterpure™ system, the entire water supply may pass through a reverse osmosis (R.O.) module and/or a water softener. However, to accomplish this, substantial plumbing parts may be required for installation of the system. Particularly, it may be difficult or impossible to install such a system under a kitchen sink or the like, since one must reroute the main water line, which is often a 19.05 mm (3/4 inch) pipe, under the kitchen sink to the R.O. module and then back out again.

On the other hand, the WaterPure™ apparatus may be installed in connection with a branch line from the main water line, using 9.525 mm (3/8 inch) water line or the like to communicate with the reverse osmosis module, and then to convey the product water to a drinking water storage tank while also to conveying waste water to a water faucet or the like from which drinking is not intended.

However, while such a system with smaller water lines can be more easily installed under a sink or the like without major plumbing work, and the supply of drinking water produced by such a system may be adequate for a single family, the use of waste water at a single tap may be inadequate to clear the R.O. module of waste products, resulting in a phenomenon called "scaling", which can render the module inefficient or inoperative.

FR-A-2087928 discloses a water purification apparatus comprising a reverse osmosis unit having a semi-permeable membrane, a water inlet connected to an upstream pressurized mains water supply, a purified water outlet, and a waste water outlet. The waste water outlet is connected to a water-utilizing appliance which uses any feedwater that passes through the inlet, but does not pass across the membrane.

US-A-3746640 discloses a water purification apparatus comprising a reverse osmosis unit having a water inlet connected by first tubing to a first, upstream, pressurized cold water supply pipe. The reverse osmosis unit also has a purified water outlet and a waste water outlet. The waste water outlet is connected by second tubing to a second, pressurized hot water supply pipe.

There is a need for a water treatment system, for example a reverse osmosis system, which can be easily installed without major plumbing modifications as would be involved in the rerouting of 19.05 mm (3/4 inch) main lines, while at the same time providing sufficient flow of the waste stream by routing it to several outlets, thereby avoiding scaling by increasing the overall flow through the R.O. module.

The pre-characterising parts of Claims 1 and 2 are based on FR-A-2 087 928, and the distinguishing features of the present invention are as set out in the characterising parts of claims 1 and 2.

By this invention, apparatus is provided which may be installed without major modifications of the main water line, yet which can be conveniently installed under a sink and elsewhere, with branch lines communicating with the main line, as well as a water treatment assembly usable in said apparatus. The water flow passing through the apparatus is spontaneous when water is being drawn through the main line, without the need for pressurization pumps or the like. Thus, the water treatment apparatus of this invention can be used with less plumbing modification and with greater flexibility and versatility, for improved ease and convenience of installation.

In this invention, apparatus is provided for treating a portion of water passing through a pressurized main water conduit, as well as a water treatment assembly usable in said apparatus. Water treatment means is provided, being typically a reverse osmosis apparatus having a water inlet and two water outlets, a product water outlet and a waste water outlet. An upstream branch line is provided for communication between the pressurized water conduit and the water inlet of the water treatment means. Another branch line is provided for connection between the waste water outlet and the pressurized water conduit at a location downstream from the location of the connection between the upstream branch line and the pressurized water conduit. The product water outlet conducts treated water to a faucet or storage tank.

Flow restrictor means are provided, to be positioned in the pressurized main water conduit between the conduit connection locations of the respective branch lines, to create the pressure drop needed to cause flow through the branch lines to reintroduce the waste stream to the main water conduit.

Thus, the apparatus, when connected to a pressurized water conduit in this manner, permits water to flow through the upstream branch line from the pressurized water conduit to the water treatment means. Likewise, waste water flows from the water treatment means through the other, downstream branch line back to the pressurized water conduit, when water is flowing through the conduit, because of the flow restrictor means.

Thus, water flowing through the pressurized water conduit provides a natural flow through the water treatment means as well, for treatment of just a portion of the supply in the pressurized water conduit. The flow restrictor creates a pressure differential between the upstream and downstream branch lines, which facilitates the flow while water is flowing through the pressurized water conduit.

In the situation where the water treatment means is for reverse osmosis, the product water outlet is the source of purified product water from the reverse osmosis device. This purified product water outlet may be connected to a water storage reservoir, which is typically called a "burp tank", to provide a constant source of the purified water to the user without regard to whether the reverse osmosis cell is producing purified product water at that moment or not.

Accordingly, the water treatment means, such as a reverse osmosis unit or other membrane module, can have a flow of water across the membrane to sweep away its highly concentrated waste stream, and to avoid plugging or "scaling" of the membrane surface by minerals and other compounds. At the same time, flexible or rigid, small-bore tubing can be used for the branch lines, for connecting the water treatment unit to the pressurized water conduit, without the need of repressurization pumps to obtain the desired circulation.

It is also desirable for the total flow impedance of water through (1) the flow restrictor means in the pressurized water conduit, and (2) the branch lines and water treatment means, to be not much higher than the flow impedance of an unmodified short segment of the pressurized water conduit typically a 1.525 m (five foot) segment. By this means, only a minor pressure drop is added to the pressurized water flow in the conduit, particularly at relatively low flow rates, which complies with many plumbing codes. The flow rate can be low and still clear the R.O. module of waste.

### DESCRIPTION OF THE DRAWING

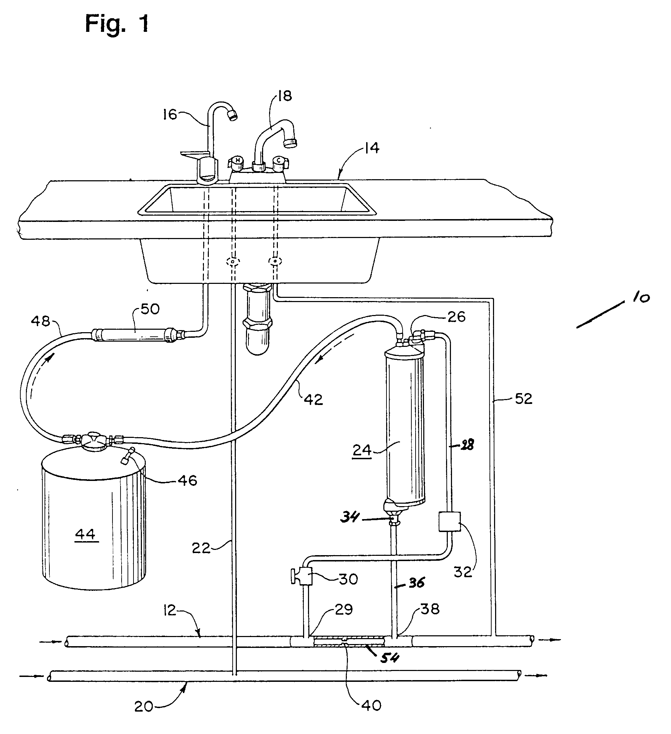

Fig. 1 is a schematic view of the water treatment apparatus in accordance with this invention.

### DESCRIPTION OF SPECIFIC EMBODIMENT

Referring to the drawing, the water treatment apparatus 10 in accordance with this invention is shown to be connected with the main cold water supply line 12 of a home or the like, and also to be connected to a sink 14 having a faucet 16 for drinking water and a general purpose faucet 18.

A main hot water line 20 is also shown, which connects through a conventional line 22 to faucet 18.

Reverse osmosis (R.O.) module 24 is shown, being positionable as desired under a sink or the like in an out-of-the-way position.

R.O. module 24 is connected at its inlet 26 by an upstream branch line 28 through a relatively upstream connection point 29 in main water line 12. Branch line 28 may, if desired, carry a control flow valve 30 and a scale inhibitor unit 32 for hard water installations, both being of conventional design.

As is conventional, R.O. module 24 has two outlets. Outlet 34 for the waste water connects to downstream branch line 36 which, in turn, connects to a downstream location 38 of main water line 12. Between upstream connection 29 and downstream connection 38 in line 12 there is positioned a flow restrictor 40 of any desired type, for example an inner sleeve carried within main line 12 to restrict the cross-sectional area of the line for a short distance. Thus, when water is flowing through main line 12, a pressure differential is created between locations 29 and 38. Accordingly, spontaneous flow takes place through upstream branch line 28, R.O. module 24, and downstream branch line 36, with the waste water from R.O. module 24 rejoining the flow in main line 12 again at location 38.

When such flow is taking place, reverse osmosis product water, being purified and with a reduced ion content, is produced and conveyed through purified water outlet line 42 to a storage tank 44, which tank may be pressurized in conventional manner through air pressure valve 46, so that water can freely flow from tank 44 through supply line 48 to faucet 16. Carbon filter 50 may be provided if desired for final purification of the drinking water as conveyed to faucet 16.

Accordingly, purified drinking water may be spontaneously produced by R.O. module 24 and provided to supply tank 44 every time water runs through main line 12. At the same time, there is no wasted water from the operation of R.O. module 24, because the waste water rejoins the main water line 12 at location 38. Main water line 12 may thus supply any desired number of other water-using units, without any significant loss of water flow capacity as takes place in other systems making use of an in-line R.O. module or the like.

For example, water may be conveyed from main line 12 through branch line 52 to faucet 18 as the cold water source. Thus faucet 18 may be supplied with both hot and cold water, while at the same time drinking water may be supplied by faucet 16, without any waste of water whatsoever. Additionally, other water-consuming devices are desirably connected to main water line 12 in a conventional manner to increase flow through the R.O. unit.

Along with this, R.O. unit 24 may be conveniently stored, and connected with small, flexible lines to the desired connection points 29, 38, so that the installation of R.O. unit 24 may take place with a relatively small plumbing job involving relatively minor modifications of main water line 12. Specifically, a special pipe section 54 may be connected into main line 12 in conventional manner. Pipe section 54 may define connections 29, 38 plus flow restrictor 40, and may be sold as a part of water treatment system 10.

## Claims

1. Apparatus for treating water passing through a pressurized water conduit (12), the apparatus comprising water treatment means (24) operable to remove impurities from water, the water treatment means having a water inlet (26), a product water outlet (42) and a waste water outlet (34); a first branch line (28) connected in fluid communication between said water inlet (26) and a first location (29) on said pressurized water conduit; and a second branch line (36) connected with the waste water outlet (34), whereby the second branch line (36) is connected in fluid communication between the waste water outlet (34) and a second location (38) on the pressurized water conduit (12), characterised by a flow restrictor means (40) positioned in said pressurized water conduit (12), said first location (29) being upstream of the flow restrictor means (40) and the second location (38) being downstream of the flow restrictor means (40), whereby the flow restrictor means (40) creates a fluid pressure differential between said locations (29,38) when water is flowing through the conduit (12), so that a portion of the water in said conduit flows through said first branch line (28) from the conduit (12) to said water treatment means (24), and from the treatment means (24) through the second branch line (36) back to the conduit (12).

2. A water treatment assembly usable in the apparatus of Claim 1, the assembly comprising water treatment means (24) operable to remove impurities from water, the water treatment means (24) having a water inlet (26), a product water outlet (42) and a waste water outlet (34), a first branch line (28) connected in fluid communication between said water inlet (26) and an input (29) for pressurized water, and a second branch line (36) connected in fluid communication between the waste water outlet (34) and an output (38) for waste water, whereby a conduit section (54) is connected in fluid communication between the input (29) and output (38) and characterised by a flow restrictor means (40) positioned in the conduit section (54) to create a fluid pressure differential between the input (29) and output (38) when water is flowing through said conduit section (54), so that, in use, a portion of the water entering the conduit section (54) at the input (29) flows through the first branch line (28) to the water treatment means (24), and from the water treatment means (24) through the second branch line (36) back to the conduit section (54) at the output (38).

3. The water treatment apparatus of Claim 1 or the assembly of Claim 2, in which said water treatment means (24) is a reverse osmosis module.

4. The apparatus of Claim 1 or 3 or the assembly of Claim 2 or 3, in which said product water outlet (42) is connected to a water storage reservoir (44).

5. The apparatus of Claim 1, 3 or 4 or the assembly of Claim 2, 3 or 4, in which the total flow impedance of water through (a) said flow restrictor means (40) and (b) said branch lines (28,36) and water treatment means (24) is substantially equal to the flow impedance of an unmodified 1.525m (five foot) segment of said pressurized water conduit (12).

## Patentansprüche

1. Vorrichtung zum Behandeln von eine unter Druck stehende bzw. Druckwasserleitung (12) durchströmendem Wasser, wobei die Vorrichtung umfaßt: eine Wasserbehandlungseinheit (24), die dem Wasser Verunreinigungen zu entziehen vermag und die einen Wassereinlaß (26), einen Produktwasserauslaß (42) sowie einen Abwasserauslaß (34) aufweist; eine in Fluidverbindung zwischen den Wassereinlaß (26) und eine erste Stelle (29) an der Druckwasserleitung eingeschaltete erste Zweigleitung (28); und eine an den Abwasserauslaß (34) angeschlossene zweite Zweigleitung (36), wobei die zweite Zweigleitung (36) in Fluidverbindung zwischen den Abwasserauslaß (34) und eine zweite Stelle (38) an der Druckwasserleitung (12) eingeschaltet ist; gekennzeichnet durch ein in der Druckwasserleitung (12) positioniertes Strömungsbegrenzer- oder -drosselmittel (40), wobei die erste Stelle (29) stromauf des Strömungsdrosselmittels (40) und die zweite Stelle (38) stromab des Strömungsdrosselmittels (40) liegen, und wobei das Strömungsdrosselmittel (40) bei die Leitung (12) durchströmendem Wasser eine(n) Druckdifferenz bzw. Wirkdruck zwischen den genannten Stellen (29, 38) erzeugt, so daß ein Teil des Wassers in der Leitung (12) von dieser über die erste Zweigleitung (28) zur Wasserbehandlungseinheit (24) und von letzterer über die zweite Zweigleitung (36) zur Leitung (12) zurück strömt oder fließt.

2. Wasserbehandlungsanordnung zur Verwendung bei der Vorrichtung nach Anspruch 1, wobei die Anordnung umfaßt: eine Wasserbehandlungseinheit (24), die dem Wasser Verunreinigungen zu entziehen vermag und die einen Wassereinlaß (26), einen Produktwasserauslaß (42) sowie einen Abwasserauslaß (34) aufweist; eine in Fluidverbindung zwischen den Wassereinlaß (26) und einen Eingang (29) für unter Druck stehendes Wasser bzw. Druckwasser eingeschaltete erste Zweigleitung (28) und eine in Fluidverbindung zwischen den Abwasserauslaß (34) und einen Ausgang (38) für Abwasser eingeschaltete zweite Zweigleitung (36), wobei eine Leitungssektion (54) in Fluidverbindung zwischen den Eingang (29) und den Ausgang (38) eingeschaltet ist, gekennzeichnet durch ein in der Leitungssektion (54) positioniertes Strömungsbegrenzer- oder -drosselmittel (40) zum Erzeugen einer (eines) Druckdifferenz bzw. Wirkdrucks zwischen Eingang (29) und Ausgang (38), wenn die Leitungssektion (54) von Wasser durchströmt wird, so daß im Gebrauch ein Teil des am Eingang (29) in die Leitungssektion (54) eintretenden Wassers über die erste Zweigleitung (28) zur Wasserbehandlungseinheit (24) und von letzterer über die zweite Zweigleitung (36) am Ausgang (38) zur Leitungssektion (54) zurück strömt oder fließt.

3. Wasserbehandlungsvorrichtung nach Anspruch 1 oder Anordnung nach Anspruch 2, wobei die Wasserbehandlungseinheit (24) ein Umkehrosmosemodul ist.

4. Vorrichtung nach Anspruch 1 oder 3 oder Anordnung nach Anspruch 2 oder 3, wobei der Produktwasserauslaß (42) an ein Wasserspeicherreservoir (44) angeschlossen ist.

5. Vorrichtung nach Anspruch 1, 3 oder 4 oder Anordnung nach Anspruch 2, 3 oder 4, wobei der Gesamt-Strömungswiderstand des Wassers durch (a) das Strömungsdrosselmittel (40) und (b) die Zweigleitungen (28, 36) und die Wasserbehandlungseinheit (24) im wesentlichen dem Strömungswiderstand eines unmodifizierten 1,525 m-(5 Fuß-)Segments der Druckwasserleitung (12) gleich ist.

## Revendications

1. Appareil pour traiter l'eau traversant une canalisation (12) d'eau sous pression, l'appareil comprenant un moyen (24) de traitement de l'eau dont le rôle est de retirer de l'eau les impuretés, le moyen de traitement de l'eau comportant une entrée (26) d'eau, une sortie (42) d'eau traitée et une sortie (34) d'eau impropre à la consommation ; une première canalisation (28) de dérivation pour mettre en communication de fluide ladite entrée (26) d'eau et un premier emplacement (29) de ladite canalisation d'eau sous pression ; et une seconde canalisation (36) de dérivation raccordée à la sortie (34) d'eau impropre à la consommation, la seconde canalisation (36) de dérivation étant destinée à mettre en communication de fluide la sortie (34) d'eau impropre à la consommation et un second emplacement (38) de la canalisation (12) d'eau sous pression, caractérisé par un moyen (40) réducteur de débit placé dans ladite canalisation (12) d'eau sous pression, ledit premier emplacement (29) étant en amont du moyen (40) réducteur de débit et le second emplacement (38) étant en aval du moyen (40) réducteur de débit, le le moyen (40) réducteur de débit créant une différence de pression dans le fluide entre lesdits emplacements (29, 38) lorsque l'eau circule dans la canalisation (12), de sorte qu'une partie de l'eau dans ladite canalisation circule dans ladite première canalisation (28) de dérivation de la canalisation (12) vers ledit moyen (24) de traitement de l'eau, et inversement du moyen (24) de traitement de l'eau dans la seconde canalisation (36) de dérivation vers la canalisation (12).

2. Ensemble de traitement de l'eau utilisable dans l'appareil selon la revendication 1, l'ensemble comprenant un moyen (24) de traitement de l'eau dont le rôle est de retirer de l'eau les impuretés, le moyen (24) de traitement de l'eau comportant une entrée (26) d'eau, une sortie (42) d'eau traitée et une sortie (34) d'eau impropre à la consommation, une première canalisation (28) de dérivation destinée à mettre en communication de fluide ladite entrée (26) d'eau et une entrée (29) destinée à l'eau sous pression, et une seconde canalisation (36) de dérivation destinée à mettre en communication de fluide la sortie (34) d'eau impropre à la consommation et une sortie (38) destinée à l'eau impropre à la consommation, une section (54) de canalisation étant destinée à mettre en communication de fluide l'entrée (29) et la sortie (38) et caractérisé par un moyen (40) réducteur de débit placé dans la section (54) de canalisation pour créer une différence de pression dans le fluide entre l'entrée (29) et la sortie (38) lorsque l'eau circule dans ladite section (54) de canalisation, de sorte que, en pratique, une partie de l'eau entrant dans la section (54) de canalisation à l'entrée (29) circule dans la première canalisation (28) de dérivation vers le moyen (24) de traitement de l'eau, et inversement du moyen (24) de traitement de l'eau dans la seconde canalisation (36) de dérivation vers la section (54) de dérivation à la sortie (38).

3. Appareil de traitement de l'eau selon la revendication 1 ou ensemble selon la revendication 2, dans lequel ledit moyen (24) de traitement de l'eau est un module à osmose inverse.

4. Appareil selon la revendication 1 ou 3 ou ensemble selon la revendication 2 ou 3, dans lequel ladite sortie (42) d'eau traitée est raccordée à un réservoir (44) de stockage de l'eau.

5. Appareil selon la revendication 1, 3 ou 4 ou ensemble selon la revendication 2, 3 ou 4, dans lequel l'impédance totale d'écoulement de l'eau (a) dans ledit moyen (40) réducteur de débit et (b) dans lesdites canalisations (28, 36) de dérivation et le moyen (24) de traitement de l'eau est sensiblement égale à l'impédance d'écoulement d'une section non modifiée de 1,525 m (cinq pieds) de ladite canalisation (12) d'eau sous pression.
